# EUROPÄISCHE PATENTANMELDUNG

(11) **EP 3 926 215 A1**
(43) Veröffentlichungstag der Anmeldung: **22.12.2021**
(21) Anmeldenummer: 21174084.0
(22) Anmeldetag: 17.05.2021
(51) Int. Cl.: F16H 57/04, B60K 1/00

(54) **VORRICHTUNG ZUR VERBESSERUNG DER KÜHLUNG EINES GETRIEBEGEHÄUSES**

(30) Priorität: 15.06.2020 DE 102020207337
(71) Anmelder: Robert Bosch GmbH, 70442 Stuttgart (DE)
(72) Erfinder: Kuehnemund, Martin, 70499 Stuttgart (DE)

(57) **Zusammenfassung**

Die Erfindung bezieht sich auf eine Vorrichtung zur Verbesserung der Kühlung eines Getriebegehäuses (12), das einen Gehäuseinnenraum (14) umfasst, der von einer Gehäusewand (40) begrenzt ist, und im Gehäuseinnenraum (14) ein Schmiermedium enthalten ist. Es ist mindestens ein Einsatzteil (28) zumindest teilweise in das Getriebegehäuse (14) integriert und bildet mit dessen Gehäusewand (40) mindestens einen Strömungskanal (32) für ein Kühlmedium. Des Weiteren bezieht sich die Erfindung auf ein Verfahren zur Befestigung mindestens eines Einsatzteils (28) im Getriebeinnenraum (14) eines Getriebegehäuses (12), welches durch eine Gehäusewand (40) begrenzt ist, und ferner auf die Verwendung der Vorrichtung in einem Getriebe eines mittels eines gekühlten elektrischen Antriebs angetriebenen Fahrzeugs.

## Beschreibung

### Technisches Gebiet

Die Erfindung bezieht sich auf eine Vorrichtung zur Verbesserung der Kühlung eines Getriebegehäuses, welches einen Gehäuseinnenraum umfasst, der von einer Gehäusewand begrenzt ist und im Gehäuseinnenraum ein Schmiermedium enthalten ist. Des Weiteren bezieht sich die Erfindung auf ein Verfahren zur Befestigung mindestens eines Einsatzteils im Gehäuseinnenraum eines Getriebegehäuses sowie die Verwendung der Vorrichtung in einem Getriebe eines mittels eines gekühlten elektrischen Antriebs angetriebenen Fahrzeugs.

### Stand der Technik

DE 10 2009 015 380 A1 offenbart ein Stranggussgetriebe mit Hitzeabschirmung. Dieses Getriebe weist einen nach außen gerichteten Kühlmantel auf, der gegen Hitzeeinwirkung von außen schützen soll. Es werden zur Bildung des Kühlmantels außen am Gussgehäuse Kühlplatten angeordnet und gegenüber der Gehäuseaußenwand abgedichtet. Eine derart gebildete Kammer wird von einem Kühlmittel durchströmt. Damit ist eine Kühlkammer offenbart, die auf einer Seite durch die Wand des Getriebegehäuses, auf der anderen Seite durch Bleche gebildet ist. Diese ist auf der einem Schmiermittel abgewandten Außenseite des Gehäuses angeordnet.

EP 0 853 225 A2 offenbart einen Kühler für das Öl im Gehäuse eines Getriebes. Dieser Kühler ist als Deckel ausgeführt, der in eine Öffnung des Getriebegehäuses eingelassen ist. Der Deckel bildet einen Wärmetauscher, der in seinem Inneren durch Strömungskanäle von Kühlmittel durchströmt ist. Das strömende Kühlmittel nimmt Wärme von dem im Inneren des Getriebes befindlichen Öl auf und führt diese nach außen hin ab. Der Wärmetauscher wird durch profilierte Bleche gebildet. Der Wärmetauscher ist ein in die Getriebegehäusewand eingesetztes Bauteil.

Bei Getrieben für Fahrzeuge besteht die Möglichkeit, diese im Rahmen einer aktiven Kühlung, beispielsweise mittels einer Ölpumpe zu kühlen, um das Öl gezielt zu den schmier- beziehungsweise kühlungsbedürftigen Komponenten zu lenken. Zusätzlich wird in der Regel ein Öl-Wasser-Wärmetauscher als externes Bauteil angebracht, um das erwärmte Öl mittels Kühlwasser zu kühlen und somit einen ausreichenden Wärmetransport des Getriebes sicherzustellen.

Bei der passiven Kühlung von Getrieben kann beispielsweise über eine Planschschmierung mittels eines Zahnrads, das im Ölsumpf liegt, das Öl im Gehäuse zu den dort vorgesehenen Komponenten verteilt werden. Hierbei kann die bei der ersten Variante erforderliche Ölpumpe entfallen, ebenso wie ein extern vorzusehender Wärmetauscher. Dies bedeutet, dass das Öl nur noch durch das Gehäuse gekühlt werden kann. Bei einem E-Achsen-Modul für ein elektrisch angetriebenes Fahrzeug ergeben sich somit zwei Wärmepfade: Zum einen kann das durch das Öl erwärmte Systemgehäuse des E-Achsen-Moduls die Wärme an benachbarte E-Maschinen über Kühlkanäle abgeben, zum anderen an die Umgebungsluft um das Gehäuse. Des Weiteren besteht die Möglichkeit, das Kühlwasser im Rahmen eines zweiten Wärmepfades entlang des Getriebes zu führen, um die Wärme direkt aus dem Gehäuse zu entnehmen und somit das Öl zu kühlen.

Im Rahmen einer aktiven Kühlung sind zusätzliche Komponenten erforderlich, um die Kühlung zu realisieren, welche die Kosten erhöhen. Bei der passiven Kühlung wird versucht, mit möglichst kostenneutral vorzunehmenden Maßnahmen die Kühlung zu verbessern. Dazu gehört es, die Kühlkanäle in das Gehäuse zu integrieren. Jedoch reicht eine Optimierung der Kühlmediumseite alleine nicht aus zu erreichen, dass der größte Wärmewiderstand zwischen dem Öl und der Gehäusewand des Getriebegehäuses entsteht, welcher den Wärmetransfer sowohl hinsichtlich der Fläche als auch hinsichtlich der Strömungsgeschwindigkeit limitiert.

### Offenbarung der Erfindung

Erfindungsgemäß wird eine Vorrichtung zur Verbesserung der Kühlung eines Getriebegehäuses vorgeschlagen, welches einen Gehäuseinnenraum umfasst, der von einer Gehäusewand begrenzt ist, und im Gehäuseinnenraum ein Schmiermedium enthalten ist. Mindestens ein Einsatzteil ist zumindest teilweise in das Getriebegehäuse integriert und bildet mit dessen Gehäusewand mindestens einen Strömungskanal für ein Kühlmedium.

Durch die erfindungsgemäß vorgeschlagene Lösung lässt sich in vorteilhafter Weise eine Erhöhung der Kühlleistung durch die Integration einer Kühlvorrichtung in den Gehäuseinnenraum des Getriebes erreichen. Des Weiteren erfolgt eine baumraumneutrale Umsetzung dieses Gedankens, indem der vorhandene Bauraum in optimaler Weise ausgenutzt wird. Des Weiteren ergibt sich in vorteilhafter Weise eine erhebliche Kostenreduktion durch die erfindungsgemäß vorgeschlagene Vorrichtung im Vergleich zu einem mit externen, aktiv vorzunehmenden Kühlmaßnahmen.

In Weiterbildung der erfindungsgemäß vorgeschlagenen Lösung umfasst die Vorrichtung das mindestens eine Einsatzteil, welches mindestens eine gestanzte Profilierung aufweist. Dadurch kann in optimaler Weise der Strömungspfad beziehungsweise mehrere Strömungspfade für das Kühlmedium realisiert werden.

In einer vorteilhaften Weiterbildung der erfindungsgemäß vorgeschlagenen Vorrichtung ist das mindestens eine Einsatzteil im Gehäuseinnenraum des Getriebegehäuses oberhalb eines Bodenbereichs angeordnet. Diese Ausführungsvariante ermöglicht einerseits eine optimale Ausnutzung des vorhandenen Bauraums und andererseits kann durch die Ausnutzung des Bereichs oberhalb des Bodenbereichs innerhalb des Getriebegehäuses eine relativ großflächige Bauweise eines Einsatzteils mit einer relativ großen Wärmeübertragungsfläche realisiert werden.

In einer weiteren vorteilhaften Weiterbildung der erfindungsgemäß vorgeschlagenen Vorrichtung können im Gehäuseinnenraum mehrere Einsatzteile nebeneinanderliegend aufgenommen werden, die mit der Gehäusewand eine Anzahl von Strömungskanälen bilden. Durch diese Ausführungsvariante kann eine modulartige Erweiterungsmöglichkeit für die Vorrichtung zur Verbesserung der Kühlung geschaffen werden, da die Anzahl von Strömungskanälen variabel gehalten werden kann und an die jeweils erforderliche Entwärmung des jeweils zu kühlenden Getriebes angepasst werden kann.

In einer weiteren vorteilhaften Ausführungsvariante der erfindungsgemäß vorgeschlagenen Vorrichtung ist das mindestens eine Einsatzteil als mindestens eine Profilierung aufweisendes Blechelement ausgeführt. Blechelemente weisen in der Regel ein sehr gutes Wärmeleitvermögen auf und sind über bewährte Umformprozesse hinsichtlich ihrer Geometrie variabel und kostengünstig anpassbar. Des Weiteren kann durch metallisches Material eine nahezu beliebige Geometrie dargestellt werden.

In einer weiteren vorteilhaften Ausführungsvariante der erfindungsgemäß vorgeschlagenen Lösung umfasst die Vorrichtung in der Gehäusewand des zu kühlenden Getriebes einen Einlass und einen Auslass für das Kühlmedium. Das Kühlmedium kann beispielsweise über den Einlass und den Auslass mittelbar und ohne Umwege in den mindestens einen Strömungskanal geleitet werden, der durch das mindestens eine Einsatzteil und die diesem gegenüberliegende Innenseite der Gehäusewand des Getriebegehäuses gebildet ist.

In einer weiteren vorteilhaften Weiterbildung der erfindungsgemäß vorgeschlagenen Vorrichtung ist das mindestens eine Einsatzteil an einer ersten und mindestens einer weiteren Fixierungsstelle stoffschlüssig im Bodenbereich des Getriebegehäuses befestigt. Neben einer Fixierung des mindestens einen Einsatzteils innerhalb des Gehäuseinnenraums des zu entwärmenden Getriebes kann durch die Ausbildung der ersten und der mindestens einen weiteren Fixierungsstelle neben der stoffschlüssig erfolgenden Befestigung eine Abdichtung des mindestens einen Strömungskanals im Gehäuseinnenraum erreicht werden.

Bei der erfindungsgemäß vorgeschlagenen Vorrichtung wird das Kühlmedium vom Ausgang eines Kühlmantels einer elektrischen Maschine zum Einlass des Strömungskanals des zu kühlenden Getriebes geleitet oder alternativ kann das Kühlmedium vor einer Leistungselektronik, die in der Regel einer elektrischen Maschine zugeordnet ist, in zwei Strömungspfade aufgeteilt werden, von denen einer das Kühlmedium direkt zum Einlass führt, so dass mit einer niedrigeren Temperatur des am Einlass in den mindestens einen Strömungskanal eintretenden Kühlmediums gekühlt werden kann. In einer weiteren Alternative besteht die Möglichkeit, das Kühlmedium mittels eines in ein Gehäuse der elektrischen Maschine eingegossenen Kanals auf kürzestem Wege dem Einlass des mindestens einen Strömungskanals am zu kühlenden Getriebegehäuse zuzuleiten.

Die Erfindung bezieht sich darüber hinaus auf ein Verfahren zur Befestigung mindestens eines Einsatzteils im Gehäuseinnenraum eines Getriebegehäuses, welches durch eine Gehäusewand begrenzt ist und ein Schmiermedium umfasst. Es werden zumindest die nachfolgenden Verfahrensschritte durchlaufen:
a) Anbringen eines Lotmaterials an einer ersten und mindestens einer weiteren Fixierungsstelle des mindestens einen Einsatzteils,
b) Einsetzen des mindestens einen Einsatzteils in den Gehäuseinnenraum und
c) Erwärmen des mindestens einen Einsatzteils zur Ausbildung stoffschlüssiger Verbindungen an der ersten und der mindestens einen weiteren Fixierungsstelle des mindestens einen Einsatzteils.

Darüber hinaus bezieht sich die Erfindung auf die Verwendung der Vorrichtung zur Verbesserung der Kühlung eines Getriebegehäuses in einem Getriebe eines mittels einer gekühlten elektrischen Maschine angetriebenen Fahrzeugs.

### Vorteile der Erfindung

Durch die erfindungsgemäß vorgeschlagene Vorrichtung zur Verbesserung der Kühlung eines Getriebegehäuses kann in vorteilhafter Weise durch das mindestens eine Einsatzteil eine erhebliche Kostenreduktion im Vergleich zur Lösung mit externen Kühlmaßnahmen erreicht werden. So können zum Beispiel die Kosten für einen Öl-Wasser-Wärmetauscher oder für ein Ölförderaggregat in Gestalt einer Ölförderpumpe eingespart werden. Des Weiteren kann durch die erfindungsgemäß vorgeschlagene Lösung eine signifikante Erhöhung der Kühlleistungen im Getriebe durch eine Verbesserung des Wärmeübergangs vom Schmiermedium Öl zum Kühlmittel durch die Erhöhung der Oberfläche erreicht werden. Wird beispielsweise das mindestens eine im Gehäuseinnenraum integrierte Einsatzteil aus mehreren Abschnitten zusammengesetzt, kann eine größere Anzahl nebeneinanderliegend und im Wesentlichen parallel zueinander verlaufender Strömungskanäle für das Kühlmedium erreicht werden, wodurch eine größere Wärmeabfuhr aus dem Getriebegehäuse erreicht werden kann.

Als besonderer Vorteil der erfindungsgemäß vorgeschlagenen Lösung verdient es hervorgehoben zu werden, dass diese insbesondere bauraumneutral vorgenommen werden kann. In vorteilhafter Weise ist das mindestens eine Einsatzteil zum größten Teil innerhalb des Getriebes aufgenommen und beansprucht daher keinen Platz am Getriebegehäuse, insbesondere nicht auf dessen Außenseite, was die Einbauvarianz in nicht unerheblichem Maße günstig beeinflusst und eine Vielzahl von Einbauvarianten möglich macht.

Des Weiteren kann durch die erfindungsgemäß vorgeschlagene Lösung eine Einsparung von Verbindungselementen, beispielsweise Schläuchen, realisiert werden und zwar durch eine direkte Kühlwasserübergabe innerhalb des E-Achsengehäuses, beispielsweise mittels der Bohrung im Guss zwischen den Kühlkanälen der einzelnen Gehäusekomponenten.

### Kurze Beschreibung der Zeichnungen

Ausführungsformen der Erfindung werden anhand der Zeichnungen und der nachfolgenden Beschreibung näher erläutert.

Es zeigen:
- Figur 1: eine Seitenansicht einer in einen Gehäuseinnenraum integrierten Vorrichtung zur Verbesserung der Kühlung und
- Figur 2: ein Detail des Aufbaus eines Strömungskanals.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

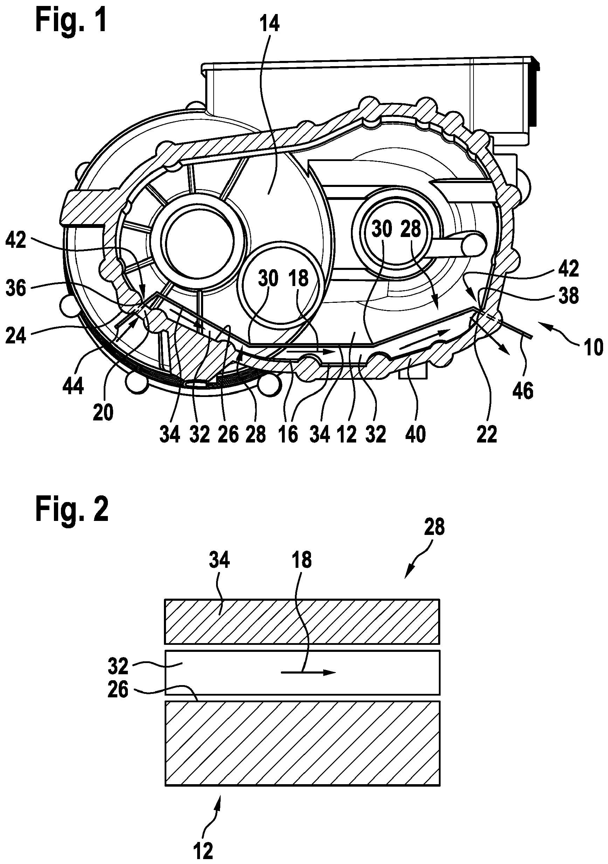

Der Darstellung gemäß Figur 1 ist die Seitenansicht auf ein Getriebe 10 zu entnehmen, dessen Getriebegehäuse 12 in Schnittdarstellung wiedergegeben ist. Das Getriebegehäuse 12 umfasst einen Gehäuseinnenraum 14 mit einem Bodenbereich 16, wobei der Gehäuseinnenraum 14 des Getriebegehäuses 12 durch eine Gehäusewand 40 begrenzt ist. Im Gehäuseinnenraum 14 des Getriebegehäuses 12 sind eine Reihe zu schmierender Komponenten wie Wellen und Zahnräder und dergleichen aufgenommen, die aus Gründen der Übersichtlichkeit in der Seitenansicht gemäß Figur 1 nicht dargestellt sind.

Aus der Darstellung gemäß Figur 1 geht hervor, dass oberhalb des Bodenbereichs 16 des Getriebegehäuses 12 ein Kühlmedium in Strömungsrichtung 18 strömt. Dieses durchströmt einen Strömungskanal 32, der einerseits durch mindestens ein mit einer oder mehreren Profilierungen 30 versehenes Einsatzteil 28 begrenzt ist.

Der durch eine Gehäusewandinnenseite 26 einerseits und durch das mindestens eine Einsatzteil 28 begrenzte Strömungskanal 32 wird ausgehend von einem Einlass 20 in Richtung eines Auslasses 22 in Strömungsrichtung 18 von einem Kühlmedium durchströmt.

Das mindestens eine Einsatzteil 28 ist mit einer oder mehreren Profilierungen 30 versehen. Die Anzahl und die Geometrie der einzelnen Profilierungen 30 richten sich nach der Konfiguration des Strömungskanals 32, nach der Strömungsgeschwindigkeit des Kühlmediums sowie nach dem entsprechenden Druckverlust des Kühlmediums bei der Passage des mindestens einen Strömungskanals 32.

Insbesondere ist das mindestens eine Einsatzteil 28 als Blechelement 34 beschaffen. Für diesen Fall kann das Einsatzteil 28 als Stanzteil mit den unterschiedlichsten Profilierungen 30 versehen werden. Darüber hinaus weist das metallische Material des Blechelements 34 hervorragende Wärmeübertragungseigenschaften auf.

Wie der Darstellung gemäß Figur 1 entnommen werden kann, wird das beispielsweise als Blechelement 34 ausgebildete Einsatzteil 28 an einer ersten Fixierungsstelle 36 an der Gehäusewandinnenseite 26 fixiert und an mindestens einer weiteren Fixierungsstelle 38 ebenfalls beispielsweise mittels einer stoffschlüssig ausbildbaren Verbindung 42 mit der Gehäusewandinnenseite 26 verbunden. Durch die erfindungsgemäß vorgeschlagene Lösung in Gestalt des mindestens einen Einsatzteils 28 lässt sich eine sehr bauraumsparende Lösung für eine Verbesserung der Kühlleistung eines Getriebegehäuses 12 erreichen.

Aus der Darstellung gemäß Figur 1 ergibt sich zudem, dass das mindestens eine Einsatzteil 28 im Gehäuseinnenraum 14 des Getriebegehäuses 12 im Wesentlichen durchgängig verläuft. Zur Verbesserung der Wärmeübertragung können die Enden, d. h. ein erster Überstand 44 beziehungsweise ein zweiter Überstand 46 derart in Durchbrüche der Gehäusewand 40 eingelassen sein, dass die Überstände 44 beziehungsweise 46 auf die Gehäusewandaußenseite 24 ragen, dort überstehen, so dass eine Wärmeabgabe an die Umgebungsluft realisiert werden kann. Dadurch wird die erzielbare Kühlleistung nochmals verbessert.

In Figur 1 ist beispielsweise die erste Fixierungsstelle 36 als stoffschlüssige Verbindung 42 und auch die weitere Fixierungsstelle 38 als stoffschlüssige Verbindung 42 ausgebildet. Durch die Realisierung stoffschlüssiger Verbindungen 42 an der ersten Fixierungsstelle 36 sowie der weiteren Fixierungsstelle 38 kann neben der mechanischen Befestigung des mindestens einen Einsatzteils 28 im Gehäuseinnenraum 14 auch eine Abdichtung der Öffnungen in die Gehäusewand 40 realisiert werden, durch welche die Überstände 44 beziehungsweise 46 auf die Außenseite (24) des Getriebegehäuses 12 zur Verbesserung der Kühlleistung überstehen.

Die stoffschlüssigen Verbindungen 42 an der ersten Fixierungsstelle 36 beziehungsweise der weiteren Fixierungsstelle 38 können beispielsweise als Löt- oder als Schweißverbindungen ausgeführt sein.

Zur Verbesserung der Kühlleistung kann die wärmeübertragende Oberfläche des mindestens einen Einsatzteils 28 dadurch vergrößert werden, dass in Richtung der Zeichenebene gemäß Figur 1 gesehen, eine Mehrzahl von Einsatzteilen 28 oberhalb des Bodenbereichs 16 im Getriebegehäuse 12 eingelassen werden. Dadurch ergeben sich entsprechend der Anzahl der zu verbauenden Einsatzteile 28, vorzugsweise ausgebildet als Blechelemente 34, eine entsprechende Anzahl von parallel zueinander verlaufenden Strömungskanälen 32, wodurch die Kühlleistung an die jeweils abzutransportierende Wärmemenge aus dem Getriebegehäuse 12 angepasst werden kann. Auch bei dieser Ausführungsvariante ergeben sich keine Platzerfordernisse hinsichtlich der Konfiguration der Außenseite (24) des Getriebegehäuses 12; vielmehr können die Einsatzteile 28 bauraumneutral im Gehäuseinnenraum 14 des zu kühlenden Getriebegehäuses 12 des Getriebes 10 untergebracht werden.

Zur Realisierung der stoffschlüssigen Verbindungen 42 kann beispielsweise ein Lotmaterial an der Gehäusewandinnenseite 26 der Gehäusewand 40 aufgebracht werden und anschließend nach dem Einsetzen des mindestens einen Einsatzteils 28 eine Erwärmung desselben erfolgen, wodurch das Lotmaterial eine Verflüssigung erfährt und eine stoffschlüssige Verbindung 42 ausbildet, die überdies äußerst wirksam als Abdichtung des Gehäuseinnenraums 14 des Getriebegehäuses 12 nach außen genutzt werden kann.

Im Inneren des Getriebegehäuses 12, d. h. im Gehäuseinnenraum 14 desselben befindet sich ein Schmiermittelvorrat, der aufgrund der Wirkung der Schwerkraft auf die Oberseite des mindestens einen Einsatzteils 28 gelangt, und seine Wärme an dieses abgibt.

Das Kühlmedium, welches den mindestens einen Strömungskanal 32 zwischen der Unterseite des mindestens einen Einsatzteils 28 und der Gehäusewandinnenseite 26 am Bodenbereich 16 des Getriebegehäuses 12 durchströmt, wird am Einlass 20 zugeführt. Der Einlass 20 beziehungsweise der Auslass 22 können beispielsweise in der Gehäusewand 40 des Getriebegehäuses 12 durch Bohrungen oder im Gussmaterial vorgesehene Öffnungen realisiert werden. Die Übergabe des Kühlmediums kann auf verschiedene Art und Weise erfolgen: Zum einen kann am Einlass 20 ein Schlauch angebracht werden, der das Kühlmedium ausgangsseitig eines Kühlmantels einer hier nicht näher dargestellten elektrischen Maschine zum Einlass 20 des mindestens einen Strömungskanals 32 transportiert. Alternativ kann beispielsweise das Kühlmedium über eine Aufteilung in unterschiedliche Strömungspfade aufgeteilt werden. Die Aufteilung der Strömungspfade des Kühlmediums liegt idealerweise vor einem Leistungselektronikteil, welches der elektrischen Maschine zugeordnet ist. Von der Gabelung des Kühlmediumstroms erfolgt die Strömung des Kühlmediums zum Einlass 20, danach schließt sich eine Passage des mindestens einen Strömungskanals 32 im Getriebegehäuse 12 an, bevor das nunmehr erwärmte Kühlmedium dem mindestens einen Strömungskanal 32 am Auslass 22 wieder verlässt. Bei dieser Lösung wird die Einlasstemperatur des Kühlmediums geringer sein, da dieses noch nicht die Wärme aus der Leistungselektronik aufgenommen hat. Dadurch wird das Kühlpotenzial des Kühlmediums aufgrund dessen geringerer Einlasstemperatur am Einlass 20 des mindestens einen Strömungskanals 32 vergrößert.

Schließlich besteht die Möglichkeit, das Kühlmedium dem Einlass 20 des mindestens einen Strömungskanals 32 im Getriebegehäuse 12 dadurch zuzuführen, dass das Kühlmedium durch einen bereits im Gehäuse der hier nicht näher dargestellten elektrischen Maschine passiert und auf kürzestem Weg direkt in den mindestens einen Strömungskanal 32 des Getriebegehäuses 12 geleitet wird.

Demnach stehen verschiedene Ausführungsvarianten der Zufuhr des Kühlmediums zu mindestens einem Strömungskanal 32, der im Getriebegehäuse 12 ausgebildet ist, zur Verfügung.

Die Profilierungen 30 im Einsatzteil 28, bevorzugt ausgebildet als Blechelemente 34, können beispielsweise über robuste Stanzverfahren realisiert werden. Entsprechend der jeweiligen Geometrie, die dem mindestens einen Einsatzteil 28 durch ein oder mehrere Profilierungen 30 aufgeprägt werden, kann die Strömung des Kühlmediums vorgegeben werden und die Geometrie des mindestens einen Strömungskanals 32 realisiert werden. Über den jeweiligen Querschnitt des mindestens einen Strömungskanals 32 im Bodenbereich 16 des Getriebegehäuses 12 sowie die Anzahl der parallel zueinander verlaufenden Strömungskanäle 32 kann die Strömungsgeschwindigkeit des Kühlmediums in dem mindestens einen Strömungskanal 32 und damit der Wärmeübergang des Kühlmediums zur Gehäusewand 40 sowie der Druckverlust optimiert werden.

Figur 2 zeigt in schematischer Weise ein Detail des Aufbaus der Gehäusewand 40 des Getriebegehäuses 12 gemäß der Seitenansicht in Figur 1.

Aus der Darstellung gemäß Figur 2 geht hervor, dass das Einsatzteil 28 beispielsweise als Blechelement 34 ausgeführt ist, von dem in der Darstellung gemäß Figur 2 lediglich ein Abschnitt dargestellt ist. Durch das Blechelement 34 einerseits und die Gehäusewandinnenseite 26 der Gehäusewand 40 andererseits wird der Strömungskanal 32 begrenzt, der vom Kühlmedium in Strömungsrichtung 18 passiert wird. Vorzugsweise ist das mindestens eine Einsatzteil 28 als Blechelement 34 aus metallischem Material mit einer oder mehreren Profilierungen 30 gemäß Figur 1 versehen ausgeführt. Über das den mindestens einen Strömungskanal 32 passierende Kühlmedium wird die Wärme aus dem Gehäuseinnenraum 14 des Getriebegehäuses 12 gemäß Figur 1 ausgetragen.

Die Erfindung umfasst darüber hinaus ein Verfahren zur Befestigung des mindestens einen Einsatzteils 28, versehen mit einer oder mehreren Profilierungen 30 oberhalb des Bodenbereichs 16 im Gehäuseinnenraum 14 des Getriebegehäuses 12. Dazu werden an den jeweiligen Fixierungsstellen 36 beziehungsweise 38 kleine Mengen beispielsweise eines Lotmaterials aufgebracht, bevor das mindestens eine, vorzugsweise aus metallischem Material gefertigte Einsatzteil 28 oberhalb des Bodenbereichs 16 im Gehäuseinnenraum 14 platziert wird. Anschließend wird das bevorzugt aus metallischem Material als Blechelement 34 ausgebildete, mindestens eine Einsatzteil 28 erhitzt, so dass es an der ersten Fixierungsstelle 36 sowie an der zweiten Fixierungsstelle 38 zur Ausbildung stoffschlüssiger Verbindungen 42 kommt. Die stoffschlüssigen Verbindungen 42 an der ersten Fixierungsstelle 36 sowie der weiteren Fixierungsstelle 38 stellen gleichzeitig Abdichtungen des Gehäuseinnenraums 14 nach außen dar. Die Öffnungen in der Gehäusewand 40 werden von den Überständen 44 beziehungsweise 46 des mindestens einen Einsatzteils 28 durchsetzt, so dass die Enden des mindestens einen, vorzugsweise als Blechelement 34 aus metallischem Material beschaffenen Einsatzteils 28 über die Gehäusewandaußenseite 24 überstehen und eine Wärmeabgabe an die Umgebung des Getriebegehäuses 12 beispielsweise durch Konvektion möglich ist.

Demnach stehen zur Entwärmung des Getriebegehäuses 12 durch die erfindungsgemäße Lösung die Wärmetransportmechanismen Wärmeleitung, Konvektion und Wärmestrahlung zur Verfügung, so dass ohne Vorsehen einer aktiven Kühlung unter Verwendung von Wärmetauschern und

Ölförderaggregaten eine Entwärmung, d. h. eine Kühlung des Getriebegehäuses 12 gemäß der vorstehenden Erfindung erreicht werden kann.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Vorrichtung zur Verbesserung der Kühlung eines Getriebegehäuses (12), das einen Gehäuseinnenraum (14) umfasst, der von einer Gehäusewand (40) begrenzt ist, und im Gehäuseinnenraum (14) ein Schmiermedium enthalten ist, **dadurch gekennzeichnet, dass** mindestens ein Einsatzteil (28) zumindest teilweise in das Getriebegehäuse (12) integriert ist und mit dessen Gehäusewand (40) mindestens einen Strömungskanal (32) für ein Kühlmedium bildet.

2. Vorrichtung gemäß Anspruch 1, **dadurch gekennzeichnet, dass** das mindestens eine Einsatzteil (28) mindestens eine gestanzte Profilierung (30) aufweist.

3. Vorrichtung gemäß den Ansprüchen 1 bis 2, **dadurch gekennzeichnet, dass** das mindestens eine Einsatzteil (28) im Gehäuseinnenraum (14) oberhalb eines Bodenbereiches (16) angeordnet ist.

4. Vorrichtung gemäß den Ansprüchen 1 bis 3, **dadurch gekennzeichnet, dass** mehrere im Gehäuseinnenraum (14) nebeneinanderliegend aufgenommene Einsatzteile (28) mit der Gehäusewand (40) eine Anzahl von Strömungskanälen (32) bilden.

5. Vorrichtung gemäß den Ansprüchen 1 bis 4, **dadurch gekennzeichnet, dass** das mindestens eine Einsatzteil (28) als ein mindestens eine Profilierung (30) aufweisendes Blechelement (34) ausgeführt ist.

6. Vorrichtung gemäß den Ansprüchen 1 bis 5, **dadurch gekennzeichnet, dass** in der Gehäusewand (40) ein Einlass (20) und ein Auslass (22) für das Kühlmedium ausgebildet sind.

7. Vorrichtung gemäß Anspruch 6, **dadurch gekennzeichnet, dass** der Einlass (20) und der Auslass (22) im Bodenbereich (16) des Getriebegehäuses (12) als Bohrungen in der Gehäusewand (40) ausgeführt sind.

8. Vorrichtung gemäß den Ansprüchen 1 bis 7, **dadurch gekennzeichnet, dass** das mindestens eine Einsatzteil (28) an einer ersten und einer weiteren Fixierungsstelle (36, 38) stoffschlüssig am Bodenbereich (16) befestigt sind.

9. Vorrichtung gemäß einem der Ansprüche 1 bis 8, **dadurch gekennzeichnet, dass** das Kühlmedium vom Ausgang eines Kühlmantels einer elektrischen Maschine zum Einlass (20) des Strömungskanals (32) strömt,
oder
das Kühlmedium vor einer Leistungselektronik einer elektrischen Maschine in zwei Strömungspfade geteilt wird und einer der Strömungspfade des Kühlmediums zum Einlass (20) führt,
oder
das Kühlmedium mittels eines in ein Gehäuse (10) der elektrischen Maschine integrierten Kanals dem Einlass (20) zugeleitet wird.

10. Verfahren zur Befestigung mindestens eines Einsatzteils (28) im Getriebeinnenraum (14) eines Getriebegehäuses (12), welches durch eine Gehäusewand (40) begrenzt ist und ein Schmiermedium enthält, mit zumindest nachfolgenden Verfahrensschritten:
a) Anbringen eines Lotmaterials an einer ersten und mindestens einer weiteren Fixierungsstelle (36, 38) des mindestens einen Einsatzteils (28),
b) Einsetzen des mindestens einen Einsatzteils (28) in den Gehäuseinnenraum (14) und
c) Erwärmen des mindestens einen Einsatzteils (28) zur Ausbildung stoffschlüssiger Verbindungen (42) an der ersten und der weiteren Fixierungsstelle (36, 38) des mindestens einen Einsatzteils (28).

11. Verfahren gemäß Anspruch 10, **dadurch gekennzeichnet, dass** die stoffschlüssigen Verbindungen (42) als Klebstoffverbindungen ausgeführt werden.

12. Verwendung der Vorrichtung gemäß einem der vorstehenden Ansprüche in einem Getriebe (10) eines mittels eines gekühlten elektrischen Antriebs angetriebenen Fahrzeugs.
